(19) Europäisches Patentamt / European Patent Office / Office européen des brevets

(11) **EP 4 311 134 B1**

## (12) EUROPÄISCHE PATENTSCHRIFT

(45) Veröffentlichungstag und Bekanntmachung des Hinweises auf die Patenterteilung:
**09.04.2025  Patentblatt 2025/15**

(21) Anmeldenummer: **23185712.9**

(22) Anmeldetag: **17.07.2023**

(51) Internationale Patentklassifikation (IPC):
*H04J 3/06* [(2006.01)]

(52) Gemeinsame Patentklassifikation (CPC):
**H04J 3/0685; H04J 3/0635**

(54) **KONTINUIERLICHE ZEITSYNCHRONISATION**

CONTINUOUS TIME SYNCHRONIZATION

SYNCHRONISATION TEMPORELLE CONTINUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **19.07.2022  AT 505392022**

(43) Veröffentlichungstag der Anmeldung:
**24.01.2024  Patentblatt 2024/04**

(73) Patentinhaber: **ABB Schweiz AG**
**5400 Baden (CH)**

(72) Erfinder:
• **Hoeftberger, Oliver**
**5142 Eggelsberg (AT)**
• **Profelt, Franz**
**5142 Eggelsberg (AT)**

(74) Vertreter: **Patentanwälte Pinter & Weiss OG**
**Prinz-Eugen-Straße 70**
**1040 Wien (AT)**

(56) Entgegenhaltungen:
CN-A- 111 953 469     US-A1- 2018 299 853
US-B2- 7 356 617

• MARC AOUN ET AL: "Distributed Task Synchronization in Wireless Sensor Networks", 11 February 2009, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 150 - 165, ISBN: 978-3-540-74549-5, XP019114799

**Beschreibung**

Die gegenständliche Erfindung beschreibt ein Verfahren zur Zeitsynchronisation von zumindest einem Master und zumindest einem Slave in einem Netzwerk, wobei der zumindest eine Master eine Masterzeit vorgibt und zumindest eine Synchronisationsnachricht mit der Masterzeit über das Netzwerk an den zumindest einen Slave sendet, wobei der zumindest eine Slave, auf welchem eine Slavezeit läuft, die Synchronisationsnachricht verwendet, um die Slavezeit an die Masterzeit mittels Synchronisation anzugleichen, wobei der zumindest eine Slave ein interruptfähiger Netzwerkteilnehmer des Netzwerks ist und einen Timer verwendet, welcher auf die Slavezeit zugreift, um zumindest einen in vorgegebenen regelmäßigen Zyklusdauern wiederholenden Interrupt zu erzeugen, und wobei bei Eintreffen einer Synchronisationsnachricht ein Zeitversatz zwischen Masterzeit und Slavezeit ermittelt wird.

Prinzipiell können ganz verschiedene Hardwarekomponenten, wie zentrale Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren, Netzwerk-Infrastruktur (Switches, Bridges etc.) usw., als Netzwerkteilnehmer eines Netzwerks vorgesehen sein. Jeder Netzwerkteilnehmer in einem Netzwerk hat zumindest eine Uhr, über welche die Arbeitsabläufe im Netzwerkteilnehmer selbst gesteuert werden. Diese Uhr kann beispielsweise die beanspruchbare CPU-Rechendauer eines jeden Computerprozesses vorgeben. Auch Arbeitsabläufe zwischen Netzwerkteilnehmern im Netzwerk werden über die Uhr abgeglichen. Damit kann die Steuerung von verschiedenen Arbeitsabläufen in einem Netzwerk realisiert werden.

Man unterscheidet prinzipiell hardwarebasierte Uhren von logischen Uhren. Hardwarebasierte Uhren sind beispielsweise Quarzoszillatoren mit Zählregister, wobei der Quarzoszillator regelmäßige Schwingungen vorgibt, die dann vom Zählregister erfasst werden. Diese weisen eine Abhängigkeit von physikalischen Größen, wie Temperatur, Luftdruck, Umgebungsfeuchte etc., auf. Daher kann der Standort eines Netzwerkteilnehmers Auswirkungen auf den Quarzoszillator haben und diese Veränderungen können in unterschiedlichen Takt- bzw. Frequenzraten einer hardwarebasierten Uhr resultieren. Während sich daraus für einen isolierten Netzwerkteilnehmer oftmals keine Konsequenzen ergeben, kann im Netzwerk mit verschiedenen Netzwerkteilnehmern eine Zeitsynchronisation zwischen Uhren der verschiedenen Netzwerkteilnehmer, welche mit unterschiedlicher Frequenz laufen, erforderlich werden.

Bei einer logischen Uhr, kommt das Taktsignal über eine Unterbrechungsanforderung von der Hardware, wie beispielsweise von einer hardwarebasierten Uhr. Die logische Uhr muss also nach dem Einschalten eines Netzwerkteilnehmers erst eingestellt werden. Eine logische Uhr ist eine Komponente eines Computersystems, welche dafür verwendet werden kann, Ereignissen, wie Arbeitsabläufen in einem Netzwerk, einen eindeutigen Zeitstempel zu geben.

Durch einen Zeitstempel wird einem Ereignis ein eindeutiger Zeitpunkt zugeordnet. Die Genauigkeit dieses Zeitstempels hängt maßgeblich von der Genauigkeit einer logischen Uhr ab. Ereignisse sind beispielsweise verschiedene physikalische Arbeitsabläufe in einer Produktionsanlage, können aber auch digitaler Natur sein, wie z.B. die Kommunikation zwischen verschiedenen Netzwerkteilnehmern. Als physikalische Arbeitsabläufe können beispielsweise Bewegungen von Maschinenteilen oder Gütern z.B. auf einer Maschine oder ein Bearbeitungsschritt auf einer Bearbeitungsmaschine ablaufen. Die physikalischen Arbeitsabläufe können von als Aktoren ausgelegten Netzwerkteilnehmern initiiert oder ausgeführt werden und von als Sensoren ausgelegten Netzwerkteilnehmern erfasst werden. So kann man beispielsweise bei Ausfall der Produktion anhand der Zeitstempel genau sagen, welche Maschine zu welchem Zeitpunkt für einen Ausfall verantwortlich war. Das erleichtert maßgeblich die Fehlersuche in hochkomplexen Produktionssystemen.

Eine Uhr eines Netzwerkteilnehmers kann sowohl als hardwarebasierte als auch logische Uhr ausgestaltet sein oder auch eine Kombination davon sein. Beispielsweise können zwei logische Uhren auf dieselbe hardwarebasierte Uhr zurückgreifen. Meist ist in einem Netzwerkteilnehmer zumindest eine hardwarebasierte Uhr eingebaut, welche zumindest jeweils eine Zeit im Netzwerkteilnehmer angibt. Solch eine Zeit zählt im Regelfall von einer ersten Initialisierung an durchgehend weiter, beispielsweise in vorgegebenen Bruchteilen von Sekunden. Der Quarzoszillator wirkt in einer solchen Uhr als Taktgeber. Damit diese Uhr nicht stehenbleibt, wenn das Gerät ausgeschaltet wird, kann die Uhr ständig von einer Spannungsquelle, also einer Batterie oder einem Akku, versorgt werden. Bei Spannungsverlust, beispielsweise bei leerer Knopfbatterie am Motherboard, würde diese Uhr dann von Neuem zu zählen beginnen, wenn eine neue Spannungsquelle eingesetzt wird.

Eine logische Uhr greift jetzt beispielsweise auf die oben genannte hardwarebasierte Uhr zu, um Arbeitsabläufe zu steuern und Ereignissen einen Zeitstempel zu geben.

In einem Netzwerk kann es zu nicht vermeidbaren Ungenauigkeiten kommen, beispielsweise weil die verbauten Quarzoszillatoren aufgrund von Fabrikationsungenauigkeiten nicht mit exakt derselben Frequenz schwingen. Weiters können verschiedene Standorte der Netzwerkteilnehmer, dazu führen, dass ein Frequenzunterschied in den Quarzoszillatoren aufgrund äußerer Einflüsse entsteht oder noch zunimmt. Netzwerkteilnehmer können gemeinsam in einer Maschinenhalle stehen, oder aber auch räumlich weit voneinander getrennt sein. Beispielsweise können Temperaturunterschiede bedingt durch unterschiedliche Außentemperaturen, Klimatisierung, CPU-Erwärmung einen Einfluss auf den Quarzoszillator haben.

Um eine zeitgesteuerte Kommunikation mittels verschiedener Netzwerkteilnehmer zu ermöglichen, ist es nötig, die Uhren in verschiedenen Netzwerkteilnehmern, in unterschiedlichen Domänen von Netzwerken oder in unterschiedlichen Netzwerken, welche eine unterschiedliche Zeit aufweisen, abzugleichen. Im einfachsten Fall wird dazu ein Netzwerkteilnehmer im Netzwerk zu einem sogenannten Master ernannt und die anderen Netzwerkteilnehmer zu sogenannten Slaves. Ein Netzwerkteilnehmer, welcher ein Master ist, kann ein besonders leistungsstarker und ausfallssicherer Netzwerkteilnehmer sein. Der Master gibt den Slaves im Netzwerk eine Uhrzeit vor und regelt damit die Zeitsynchronisation. Im Regelfall gibt es mehrere Master in einem Netzwerk. Es kann auch möglich sein, dass die Masterrollen zwischen Netzwerkteilnehmern regelmäßig wechseln, beispielsweise bei Ausfall eines Netzwerkteilnehmers der als Master fungiert, oder beim Ausfall der Verbindung zwischen verschiedenen Teilen von Netzwerken.

Es kann auch sein, dass sich verschiedene Netzwerke zeitlich aufeinander abstimmen bzw. synchronisieren. Innerhalb jedes Netzwerkes gibt es dann einen Master für die Zeitsynchronisation. Ein Master eines zweiten Netzwerkes agiert zur Zeitsynchronisation als Slave des Masters eines ersten Netzwerkes. Der als Slave agierende Master des zweiten Netzwerkes synchronisiert sich dann mit dem Master des ersten Netzwerkes. Danach kann der Master des zweiten Netzwerkes alle Slaves des zweiten Netzwerkes synchronisieren. Hierfür kann auch eine Netzwerkhierarchie festgelegt sein, gemäß der festgelegt ist, in welcher Reihenfolge sich die einzelnen Netzwerke aufeinander synchronisieren. Somit kann der Master des zweiten Netzwerkes eine eigene Uhrzeit im zweiten Netzwerk vorgeben, welche mit einer Masterzeit des ersten Netzwerkes über eine Zeitsynchronisation abgeglichen wird. Beispielsweise kann ein Netzwerkteilnehmer als Master in einem Netzwerk agieren, solange er keine Zeitsynchronisation eines Masters eines hierarchisch darüberliegenden Netzwerkes erhält. Es ist beispielsweise denkbar, dass ein Netzwerk in einer Maschine zuerst eine Zeitsynchronisation intern durchführt, wobei das Netzwerk alleine laufen kann und selbst Netzwerkteilnehmer enthält, wobei zumindest ein Master und ein Slave vorhanden sind. Bei Integration dieser Maschine in eine Produktion kann es dann nötig sein, dass das Netzwerk der Maschine mit einem hierarchisch höheren Netzwerk, beispielsweise einem Netzwerk der Produktionsanlage, synchronisiert wird. Es ist auch denkbar, dass verschiedene Domänen eines Netzwerks von einem Master synchronisiert werden.

Oftmals gibt es in einem Netzwerk aber nicht nur einen Master für eine Uhr, sondern eine Mehrzahl an Mastern, sogenannte "Standby-Master". Solange der ursprüngliche Master die Zeitsynchronisation bezüglich einer Uhr durchführt, verhalten sich die Standby-Master wie Slaves. So kann, wenn der erste Master ausfällt, einer der Standby-Master übernehmen und die Zeitsynchronisation durchführen.

Weiters können Master für die Zeitsynchronisation hinsichtlich anderer Aufgaben nur einfache Slaves sein. Die Ausdrücke "Master" und "Slave" beziehen sich in der gegenständlichen Erfindung ausschließlich auf die Zeitsynchronisation in einem Netzwerk und nicht auf andere Funktionalitäten, z.B. in einem Produktionsprozess. Sowohl Master und Slaves sind aber Netzwerkteilnehmer in einem Netzwerk.

Im Regelfall erfolgt ein Abgleich der Uhren in einem Netzwerk über eine Synchronisation. Dabei wird eine vollständige Anpassung der Zeit zwischen Master und Slave vorgenommen. Der Slave gleicht sowohl die Frequenz als auch die Zeitdifferenz ab. Unter Zeitdifferenz versteht man den konkreten Unterschied zwischen der Uhr des Masters und des Slaves. Ein Master hat beispielsweise eine Uhrzeit von 13:02, und ein Slave von 13:05. Jetzt wird die Uhrzeit des Slaves von 13:05 auf 13:02 gestellt. Weiterhin gleicht der Slave aufgrund der Kenntnis über die Zeit im Master, beispielsweise aufgrund von Synchronisationsnachrichten des Masters, die Frequenz ab, damit die Uhren gleich schnell laufen. Ein genauer Abgleich der Frequenzen kann auch erst nach einer gewissen Anzahl an Synchronisationsnachrichten möglich sein.

Um Zeitsprünge möglichst zu vermeiden, kann die Frequenz des Slaves beschleunigt oder verzögert werden, damit die Uhren in Master und Slave sich abgleichen. Dieser Prozess kann bei hohen Abweichungen von Master und Slave jedoch lange dauern und zu anhaltenden Fehlern, vor allem in der Frequenz, führen.

Ein alleiniger Abgleich der Frequenzen kann über so genannte Syntonisation erfolgen. Unter Syntonisation versteht man die Anpassung der Frequenz zwischen einem Master und einem Slave in einem Netzwerk, ohne dass ein Abgleich einer Zeitdifferenz, wie bei der Synchronisation angewandt wird. So würde die Uhrzeit des Slaves, nicht wie im obigen Beispiel, auf die Uhrzeit des Masters mittels eines Sprungs korrigiert werden, sondern die Uhrzeiten würden mit derselben Differenz weiterlaufen. Das verhindert Sprünge in der Uhr und vermeidet auch die falsche Zuordnung von Ereignissen, beispielsweise in Arbeitsabläufen. Jedoch wird durch Anpassung der Frequenz zumindest verhindert, dass die Differenz größer wird, wenn beide Uhren dieselbe Frequenz aufweisen.

Der Stand der Technik für die Zeitsynchronisation ist heutzutage der PTP (Precision Time Protocol) - Standard (IEEE 1588) der IEEE. Dieser sieht vor, dass jede Uhr in einem Netzwerkteilnehmer über das Netzwerk separat mit einem Master synchronisiert wird. Beispielsweise kann eine Uhr auf Basis des Standards mit anderen Uhren im Netzwerk abgeglichen werden.

Synchronisierte Anwendungen, wie beispielsweise hochgenaue Arbeits- bzw. Produktionsabläufe, werden über zumindest einen Timer in einem Netzwerkteilnehmer gesteuert. Ein Timer kontrolliert zyklische Prozesse in einem System, indem er in regelmäßigen Intervallen (Zyklusdauer) eine Unterbrechungsanforderung - einen so genannten Interrupt - ausgibt. Mit jedem Interrupt wird ein sich zyklisch wiederholender Prozess (im Wesentlichen ein Stück eines im Netzwerkteilnehmer laufenden Programmcodes, eine sogenannte Unterbrechungs- oder Interrupt Service Routine) durchgeführt. Das kann beispielsweise für gegenwärtige und zukünftige Ereignisse, wie ein Schritt in einem Produktionsablauf, wichtig sein, welche zu einem vordefinierten Interrupt des Timers auslösen sollen. Ein Timer kann beispielsweise einen Interrupt alle 100 Mikrosekunden ($\mu$s) auslösen, oder auch in längeren oder kürzeren Zeitintervallen. Ein Timer ist üblicherweise konfiguriert, um die gewünschten oder benötigten Interrupts auszulösen.

Beim Starten eines Produktionsablaufs wird im Regelfall eine vorgegebene Zeit zugewartet, bis die Uhren aller Netzwerkteilnehmer synchronisiert sind und sich auch die Zyklusdauer aller Interrupts eingestellt hat, weil beim Starten aufgrund von Ungenauigkeiten der Schwingquarze die Zyklusdauer der einzelnen Interrupts in den Netzwerkteilnehmern beispielsweise unterschiedliche Frequenzen aufweisen können bzw. die Interrupts verschiedener Netzwerkteilnehmer noch nicht gleichzeitig auftreten. Es ist auch möglich, dass ein Netzwerkteilnehmer mehrere, verschiedene Interrupts ausgibt. Das ist beispielsweise möglich, wenn mehrere Prozesse auf einen Netzwerkteilnehmer zugreifen, oder der Netzwerkteilnehmer mehrere Prozesse steuern muss. Dann können Interrupts auch unterschiedliche Zyklusdauern haben, beispielsweise 200 $\mu$s und 1000 $\mu$s.

Allerdings kann ein Verlust der Verbindung während eines laufenden Prozesses zu Problemen in der Zeitsynchronisation führen. Ein Verbindungsverlust kann beispielsweise ungewollt passieren, über einen Verlust der Konnektivität, beispielsweise Durchtrennen eines Kabels oder Ausfall eines Switches, Modems oder Routers, oder Verlust einer GPS-Verbindung eines KFZs bei Eintritt in einen Tunnel. Dann können Netzwerkteilnehmer oder ganze hierarchisch untergeordnete Netzwerke systemintern weiterarbeiten, aber auch in einen Abschalt- oder Stand-by-Modus wechseln, Herunterfahren oder wenn keine Sicherungsautomatik vorhanden ist, auch abstürzen. Bei neuerlichem Starten des Netzwerkteilnehmers bzw. bei Wiederverbindung kann die Zeitsynchronisation bis zu einer nächsten Synchronisationsnachricht verloren sein. Auch ist es möglich, dass Interrupts dann nichtmehr korrekt laufen.

Es kann aber auch gewollte Unterbrechungen der Verbindung geben, beispielsweise bei autonom fahrenden Fahrzeugen, welche von ihrer Basisstation über einen gewissen Zeitraum getrennt sind.

Dann kann es passieren, dass die Zyklusdauer der Interrupts zwischen den verschiedenen Netzwerkteilnehmern auseinanderläuft. Im Stand der Technik wird die Zeit zwischen Slave und Master mittels eines einzigen Synchronisationsschrittes wieder angepasst. Das kann zur Folge haben, dass die tatsächliche Zyklusdauer des Interrupts zum Zeitpunkt der Synchronisationsnachricht, vor allem verkürzt oder auch verlängert werden kann. Folglich kann das zu Problemen in der zeitlichen Abfolge und Stabilität von hochpräzisen Arbeitsabläufen führen, an denen mehrere Netzwerkteilnehmer beteiligt sein können.

Aus Marc Aoun et al.: "Distributed Task Synchronization in Wireless Sensor Networks", in Wireless Sensor Networks, 2009, Volume 5432, pp. 150 - 165 wird diskutiert, wie Interrupts beispielsweise zeitlich korrekt generiert werden, wobei zeitgleich die Zeitsynchronisation gewährt bleiben muss. Dabei wird vorgeschlagen, einen Zeitversatz durch eine Kombination aus einer periodischen Sofortkorrektur, welche als Major Correction Steps (MCS) bezeichnet wird, und einer Korrekturphase - Skew Compensation Phase (SCP), die sich über mehrere aufeinanderfolgende Timerrunden erstreckt und während der keinen Nachrichten ausgetauscht werden, kompensiert wird.

Weiterhin ist aus der CN 111 953 469 A ein Verfahren zum Synchronisieren eines Servotreibers mit einer Ethercat DC Clock bekannt. Dabei wird bei Eintreffen eines Synchronisationssignals eine Abweichung der Slavezeit von der DC-Zeit in einem DC-Synchronisationszyklus in Echtzeit ermittelt. Diese Abweichung wird zwar auf mehrere Intervalle aufgeteilt, allerdings wird die Zyklusdauer eines Interrupts angepasst.

Es ist daher die Aufgabe der gegenständlichen Erfindung, eine Zeitsynchronisation zur Verfügung zu stellen, welche die Unterbrechungen von Arbeitsabläufen verhindert.

Die Aufgabe wird erfindungsgemäß dadurch gelöst, dass bei Eintreffen einer Synchronisationsnachricht ein Zeitversatz zwischen Masterzeit und Slavezeit ermittelt wird, dass ein erster Zeitanteil des ermittelten Zeitversatzes der Slavezeit relativ zur Masterzeit, welcher einem ganzzahligen Vielfachen der Zyklusdauer des zumindest einen Interrupts entspricht, in zumindest einem ersten Synchronisationsschritt mittels Zeitsprung angeglichen wird, und dass ein zweiter Zeitanteil des Zeitversatzes der Slavezeit, welcher einem nichtganzzahligem Vielfachen aus dem Bereich ]-1,0[ und ]0,1[ der Zyklusdauer des zumindest einen Interrupts entspricht, in einer Anzahl an aufeinanderfolgenden zweiten Synchronisationsschritten mittels Frequenzabgleich und/oder Zeitsprung angeglichen wird, wobei in jedem Synchronisationsschritt der Anzahl an zweiten Synchronisationsschritten eine sich einstellende, tatsächliche Zyklusdauer des zumindest einen Interrupts maximal um eine vorgegebene Abweichung von der vorgegebenen Zyklusdauer abweicht.

Das ist vorteilhaft, da in zumindest einem ersten Synchronisationsschritt eine sehr große Zeitdifferenz synchronisiert werden kann, ohne den Echtzeitbetrieb in einer Produktion zu stören. Da die Interrupts in viel höherer Frequenz, verglichen mit dem Empfang von Synchronisationsnachrichten, erzeugt werden, sind diese kleinen Ungenauigkeiten in der Zeitsynchronisation nach dem ersten Synchronisationsschritt im Regelfall irrelevant. Erfindungsgemäß ist auch der zweite Synchronisationsschritt so ausgestaltet, dass eine tatsächliche Zyklusdauer des Interrupts nur unwesentlich verlängert oder verkürzt wird, nämlich innerhalb einer vorgegebenen Abweichung. Damit kann die Zeitsynchronisation weiter durchgeführt werden, ohne laufende Arbeitsabläufe zu gefährden.

Vorteilhafterweise kann zumindest ein interruptfähiger Netzwerkteilnehmer zumindest einem weiteren, hierarchisch untergeordneten Netzwerk entsprechen. Eine Synchronisationsnachricht wird über einen weiteren Master an zumindest einen Netzwerkteilnehmer im zumindest einen weiteren, hierarchisch untergeordneten Netzwerk verteilt. Damit ist es möglich, die Zeitsynchronisation auch in weiteren Netzwerken zu verteilen, welche in anderen Domänen vorhanden sind, oder dem Netzwerk hierarchisch untergeordnet sind. Das kann beispielsweise bei einer Maschine der Fall sein, welche sowohl "stand alone" arbeiten kann, aber auch in eine Produktion eingegliedert werden kann. Dann muss die Maschine sowohl intern in der Maschine selbst eine Zeitsynchronisation ermöglichen, als auch von einem hierarchisch übergeordneten Netzwerk bzw. Master eine Zeitsynchronisation erhalten können. Oftmals sind solche Netzwerke über Gateways, wie beispielsweise Switches, Modems oder Router, verbunden, und ein Gateway kann dann als weiterer Master im zumindest einen weiteren, hierarchisch untergeordneten Netzwerk fungieren. Es können damit in den unterschiedlichen Netzwerken auch unterschiedliche bzw. eigenständige Synchronisationsnachrichten über die Master im übergeordneten und hierarchisch untergeordneten Netzwerk verteilt werden.

Vorteilhafterweise wird bei einer Mehrzahl an Interrupts im interruptfähigen Netzwerkteilnehmer das kleinste gemeinsame Vielfache der Zykluszeiten der Mehrzahl an Interrupts für den ersten Synchronisationsschritt herangezogen. Es gibt oftmals eine Vielzahl an Interrupts in jedem Netzwerkteilnehmer, wobei die Interrupts verschiedenste Abläufe oder Steuergeräte, welche an einen Netzwerkteilnehmer angeschlossen sind, steuern können. Somit ist sichergestellt, dass die Zeitsynchronisation auf alle Interrupts in einem Netzwerkteilnehmer anwendbar ist.

Vorteilhafterweise wird ein ganzzahliges Vielfaches des kleinsten gemeinsamen Vielfachen der Zykluszeiten der Mehrzahl an Interrupts für den ersten Synchronisationsschritt herangezogen. Somit kann eine Zeitsynchronisation an Abläufe oder Steuerungen angepasst werden, welche bestimmte Interrupts des Timers verwenden. Beispielweise ist es möglich, dass ein an einen Netzwerkteilnehmer angeschlossenes Steuergerät nicht jeden Interrupt verwendet, sondern nur nach jeweils einer vorgegebenen Anzahl an Interrupts auslöst.

Vorteilhafterweise werden bei einer Mehrzahl an Interrupts die Anzahl an zweiten Synchronisationsschritten auf Basis der vorgegebenen kleinsten Abweichung der Interruptdauer durchgeführt. Somit können auch die zweiten Synchronisationsschritte auf eine Vielzahl an Interrupts angepasst werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt

Fig. 1 ein erfindungsgemäßes Netzwerk mit Master und Slaves,

Fig. 2 die Auswirkungen einer Zeitsynchronisation aus dem Stand der Technik auf verschiedene Interrupts in verschiedenen Netzwerkteilnehmern

Fig. 3 erfindungsgemäße Zeitsynchronisation und deren Auswirkungen auf verschiedene Interrupts,

Fig. 4 den erfindungsgemäßen Zeitsynchronisationsmechanismus in einem Netzwerkteilnehmer, und

Fig. 5 ein Netzwerk mit Master und Slaves und hierarchisch untergeordnetem Netzwerk.

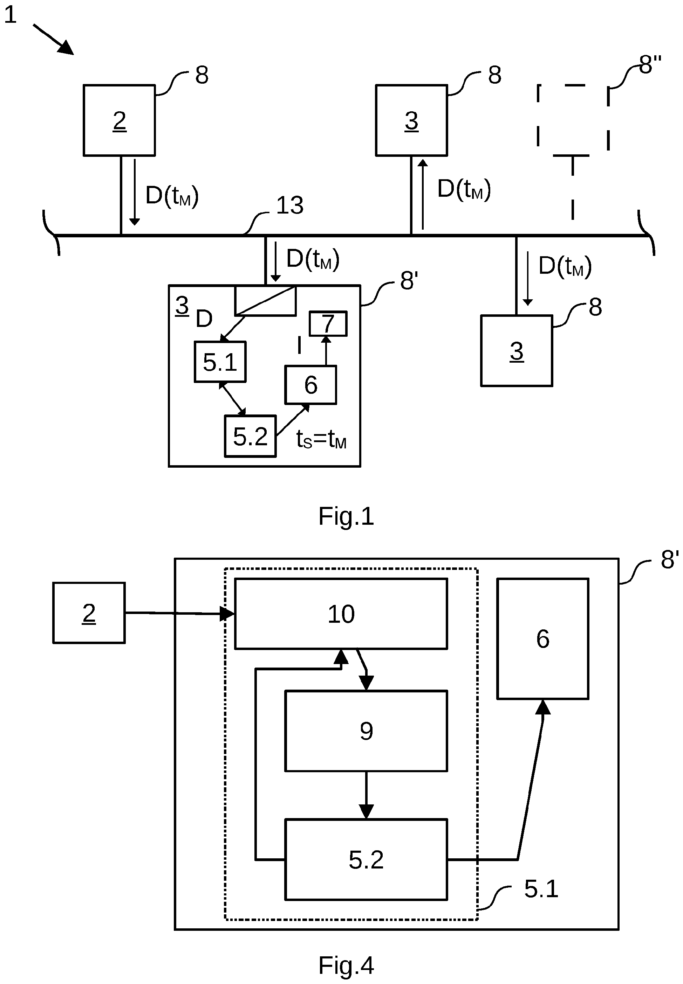

Fig. 1 zeigt ein beispielhaftes Netzwerk 1 mit mehreren Netzwerkteilnehmern 8, 8', 8" wobei zumindest ein Master 2 und mehrere Slaves 3 bezüglich des Zeitabgleichs vorhanden sind. Die Netzwerkteilnehmer 8, 8', 8" sind über Netzwerkleitungen 13 miteinander verbunden. Oftmals bilden die Netzwerkleitungen 13 einen Datenbus zur Datenkommunikation zwischen den Netzwerkteilnehmern 8, 8', 8" aus, wie auch in Fig. 1 dargestellt. Die Netzwerkleitungen 13 können Lan-Kabel, Netzwerkbusse, Glasfaserkabel und ähnliches sein, welche eine Kommunikation im Netzwerk 1 zwischen den Netzwerkteilnehmern 8, 8', 8" erlauben. Zur Datenkommunikation kann ein beliebiges Kommunikationsprotokoll implementiert sein. Auch kann Netzwerkinfrastruktur vorgesehen sein, die verschiedene Netzwerke 1 oder verschiedene Abschnitte eines Netzwerkes 1 miteinander verbindet, beispielsweise Switches, Router usw. Auch drahtloser Datenverkehr mit Zeitsynchronisation über ein drahtloses Netzwerk, wie beispielsweise Wireless-Lan (WLAN), ist in einem Netzwerk 1, oder in Teilen von einem Netzwerk 1 denkbar. In diesem Fall ist die Netzwerkleitung 13 eine drahtlose Verbindung zwischen den Netzwerkteilnehmern 8, 8', 8". Das Netzwerk 1 kann auch als gemischtes, drahtgebundenes und drahtloses Netzwerk 1 ausgeführt sein. Alle Netzwerktopologien für das Netzwerk 1, welche für den Fachmann geläufig sind und einen Datentransfer mit Zeitsynchronisation zwischen den Netzwerkteilnehmern 8, 8', 8" ermöglichen, sind vorstellbar.

In einer Netzwerktopologie eines Netzwerks 1 können eine Vielzahl von unterschiedlichen Netzwerkteilnehmern 8, 8', 8", wie Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren usw., vorhanden sein. Ein Netzwerkteilnehmer 8, 8', 8" umfasst üblicherweise einen Mikroprozessor 7, auf dem gespeicherter Programmcode ausgeführt wird.

Dazu kann auf einem Netzwerkteilnehmer 8, 8', 8" auch ein Betriebssystem installiert sein und laufen, wobei auf unterschiedliche Netzwerkteilnehmer 8, 8', 8" die unterschiedlichsten Betriebssysteme laufen können, wie Linux/Unix, Windows, Android und ähnlichem.

Es ist im Netzwerk 1 zumindest ein interruptfähiger Netzwerkteilnehmer 8' vorhanden, welcher neben einer Uhr 5.2 auch einen Timer 6 aufweist, welcher vorgesehen ist, einen in vorgegebenen regelmäßigen Zyklusdauern $t_c$ wiederholenden Interrupt I zu erzeugen, wie in Fig. 1 gezeigt wird. Der Interrupt I wird vorzugsweise im Mikroprozessor 7 verarbeitet, beispielsweise um damit den Ablauf von Programmcode zu steuern. Der Timer 6 greift dazu auf die Zeit der Uhr 5.2 im interruptfähigen Netzwerkteilnehmer 8' zu. Da der interruptfähige Netzwerkteilnehmer 8' ein Slave 3 bezüglich der Zeitsynchronisation ist, ist die Zeit der Uhr 5.2 abhängig von der Masterzeit $t_M$ des Masters 2 (Netzwerkteilnehmer 8) und daher eine Slavezeit ts. Folglich nutzt der Timer 6 eines Slaves 3 die Slavezeit ts, um die Interrupts I zu erzeugen.

Es kann aber auch weitere interruptfähige Netzwerkteilnehmer 8" im Netzwerk 1 geben, wie in Fig. 1 strichliert angedeutet.

Eine noch nicht in Bezug auf die Masterzeit $t_M$ synchronisierte Slavezeit $t_s$ kann unterschiedlich bezüglich der Absolutzeit und der Frequenz sein. Beispielsweise kann die Slavezeit $t_s$ um eine gewisse Zeitspanne, wie mehrere Jahre, Wochen, Tage, Stunden usw., unterschiedlich zur Masterzeit $t_M$ sein, aber die gleiche Frequenz aufweisen. Damit wäre die Absolutzeit nicht ident, beispielsweise kann die Slavezeit $t_s$ im Slave 3 das Jahr 2019 aufweisen und die Masterzeit $t_M$ im Master 2 das Jahr 2021, die Masterzeit $t_M$ und die Slavezeit $t_s$ würden allerdings gleich schnell vergehen. Bei derselben Frequenz ist die nominelle Dauer beispielsweise einer Sekunde gleich - d.h. im Master 2 und im Slave 3 vergehen die Sekunden gleich schnell. Jedoch ist es auch möglich und oftmals wahrscheinlich, dass vor einer Synchronisation weder Absolutzeit noch Frequenz von Master 2 und Slave 3 gleich sind. Daher kann bei unterschiedlichen Frequenzen von Slave 3 und Master 2 auch eine nominell gleiche Zyklusdauer $t_c$ eines Interrupts I im Master 2 und im Slave 3, oder auch von verschiedenen Slaves 3, tatsächlich unterschiedlich sein und die wirklich gemessenen Zyklusdauern $t_c$ können voneinander abweichen. Unterschiedliche Zyklusdauern $t_c$ können zu Problemen in hochgenauen Produktionsabläufen führen, an denen verschiedene Netzwerkteilnehmer 8, 8', 8" beteiligt sind, da dann z.B. die damit gesteuerten Programmcodes nicht hinreichend synchronisiert ablaufen.

Der Master 2 sendet an die Slaves 3 im Netzwerk 1 üblicherweise eine Synchronisationsnachricht D. Die Synchronisationsnachricht D enthält die aktuelle Masterzeit $t_M$. Beispielsweise kann die Synchronisationsnachricht D über einen Netzwerkport des Slaves 3 empfangen werden. Die enthaltende Masterzeit $t_M$ wird im Slave 3 in einer Synchronisationseinheit 5.1 verarbeitet. Die Synchronisationseinheit 5.1 kann dazu auch im Mikroprozessor 7 implementiert sein. Eine Synchronisationseinheit 5.1 kann software- und/oder hardwarebasiert sein und führt einen Programmcode bzw. eine Hardware-Schaltung aus. Die Synchronisationseinheit 5.1 gibt der Uhr 5.2 eine aktuelle Slavezeit $t_S$ vor, welcher der Masterzeit $t_M$ aus der Synchronisationsnachricht D angeglichen wird. Die Synchronisationseinheit 5.1 kann auch in der Uhr 5.2 integriert sein. Die Synchronisationsnachrichten D können zu unterschiedlichen Zeiten an verschiedenen Slaves 3 ankommen. Das kann von der Position des jeweiligen Slaves 3 im Netzwerk 1 und der Laufzeit der Synchronisationsnachricht D abhängig sein.

Die Synchronisationseinheit 5.1, im Wesentlichen in üblicher Implementierung ein entsprechender im Slave 3 ablaufender Programmcode, beispielsweise ein Synchronisationsstack 10 (vergleiche Fig. 4), vergleicht die eigene aktuelle Slavezeit $t_S$ mit der Masterzeit $t_M$ aus der Synchronisationsnachricht D. Bevorzugterweise ist die Laufzeit der Synchronisationsnachricht D im Netzwerk 1 bekannt und wird von der Synchronisationseinheit 5.1 bei der Zeitsynchronisation mitberücksichtigt. Die Synchronisationseinheit 5.1 gleicht die Absolutzeit und die Frequenz der Uhr 5.2 an den Master 2 an, sodass nach der Synchronisation die Slavezeit $t_S$ der Masterzeit $t_M$ entspricht, wie in Fig. 1 gezeigt. Die Frequenz kann beispielsweise aus der errechneten Zeitdifferenz von mehreren aufeinanderfolgenden Synchronisationsnachrichten D genau berechnet werden.

Die vom Timer 6 im Slave 3 erzeugten Interrupts I können von gleicher nomineller Zyklusdauer $t_c$ sein, es ist aber auch möglich, dass die Zyklusdauern $t_c$ nach einem bestimmten Schema unterschiedlich sind. Es kann auch mehrere Interrupts I mit verschiedenen nominellen Zyklusdauern $t_c$ in einem einzigen interruptfähigen Netzwerkteilnehmer 8',8" geben.

Zum leichteren Verständnis der Erfindung wird in den folgenden Ausführungen, ohne Einschränkung der Allgemeinheit, auf unterschiedliche Zyklusdauern $t_C$ verzichtet und alle Zyklusdauern $t_C$ entsprechen der nominellen Zyklusdauer $t_C$ des Interrupts I(2) des Masters 2, welcher auch ein interruptfähiger Netzwerkteilnehmer 8',8" sein kann. Weiters wird angenommen, dass alle Slaves 3 die Synchronisationsnachrichten D zum gleichen Zeitpunkt erhalten.

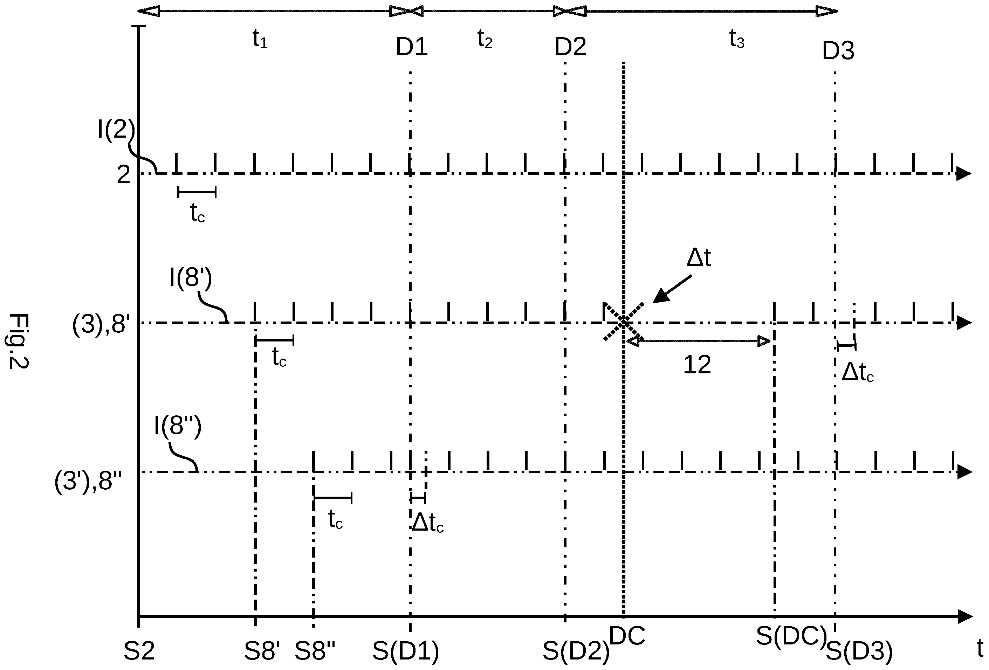

Die Synchronisation und deren Auswirkungen auf einen Interrupt I nach dem Stand der Technik sind in Fig. 2 dargestellt. Die Abszisse beschreibt eine Systemzeit t, und die Ordinate entspricht den verschiedenen Interrupts I(2), I(8'), I(8") im Netzwerk 1 als Zeitstrahlen. Der Master 2 hat einen Interrupt I(2) mit beispielsweise einer Zyklusdauer $t_C$ von 1 Millisekunde (ms). Weiters sind ein Slave 3 als interruptfähiger Netzwerkteilnehmer 8' mit einem Interrupt I(8') und ein weiterer Slave 3' als weiterer interruptfähiger Netzwerkteilnehmer 8" mit einem Interrupt I(8") vorhanden. Die Interrupts I(8'), I(8") haben nominell dieselbe Zykluszeitdauer $t_C$ wie der Interrupt I(2) des Masters 2. Eine reale Zyklusdauer $t_{C,R}$ im jeweiligen Netzwerkteilnehmer 8', 8" kann jedoch aufgrund von unterschiedlichen Frequenzen der Uhren 5.2 in den interruptfähigen Netzwerkteilnehmern 8',8" (Slaves 3, 3') unterschiedlich sein. Beispielweise, kann die tatsächliche Zyklusdauer $t_{C,R}$ des interruptfähigen Netzwerkteilnehmer 8' 1020 µs sein, während die Zyklusdauer $t_{C,R}$ des weiteren interruptfähigen Netzwerkteilnehmer 8" 980 µs sein kann.

Die Zeitpunkte S2, S8', S8" der Interrupts I(2), I(8'), I(8") können unterschiedlich sein, beispielweise beim Hochfahren eines PCs, Initialisieren einer Produktionsmaschine, gegeben im Zeitbereich t1. Der Master 2 schickt nach einer gewissen Zeitspanne die erste Synchronisationsnachricht D1 über das Netzwerk 1 zu den Slaves 3, 3'. Über die erste Synchronisationsnachricht D1 werden, wie oben beschrieben, die Uhren 5.2 in den Slaves 3, 3', synchronisiert. Dabei werden die Slavezeiten $t_S$ in den Slaves 3, 3' mittels Zeitsprung an die Masterzeit $t_M$ angeglichen.

Im beschriebenen Ausführungsbeispiel wird angenommen, dass zum Zeitpunkt S(D1) alle Interrupts I(2), I(8'), I(8") synchron laufen sollen. Das ist aber nicht immer zwingend der Fall. Der Zeitsprung der Uhren 5.2 zum Zeitpunkt S(D1) führt dazu, dass der Interrupt I(8") um einen Interruptversatz $\Delta t_C$ verkürzt ist. Beim Hochfahren bzw. bei der Initialisierung kann ein einziger Zeitsprung, der die Absolutzeit im Slave 3 völlig angleicht, wie bei S(D1), unproblematisch sein, da ein Verkürzen des Interrupt I(8") noch keine Auswirkungen hat. So können beispielsweise bei einem Interrupt I(8'), I(8"), welcher eine nominelle Zyklusdauer $t_C$ von 1000 $\mu$s lang ist, erst 600 $\mu$s vergangen sein. Durch den Zeitsprung verliert dieser Interrupt I(8'), I(8") den Interruptversatz $\Delta t_C$ bzw. 400 $\mu$s und beginnt neu zu laufen. Der Interrupt des Masters I(2) macht im Allgemeinen keinen Zeitsprung. Im Falle eines Wechsel des Masters 2 kann es aber durchaus wieder möglich sein, dass der Interrupt I(2) des bisherigen Masters 2 als Slave 3 wieder Zeitsprünge durchführt.

Im Zeitbereich t2, zwischen erster Synchronisationsnachricht D1 und einer folgenden zweiten Synchronisationsnachricht D2 laufen die Interrupts I(2), I(8'), I(8") unverändert und synchron zueinander weiter. Die Zeit zwischen den aufeinanderfolgenden Synchronisationsnachrichten D1 und D2 ist nicht zwingend gleich lang. Der Zeitbereich t2 kann sich weiters über eine große Anzahl an Synchronisationsnachrichten D ziehen und stellt den gewünschten Betriebsmodus dar.

Im Bereich t3, also beispielsweise schon während des Betriebs einer Produktionsanlage, also während Produktionsabläufe im Gange sind und Steuerungsaufgaben durchgeführt werden, kann eine Unterbrechung zu einem Zeitpunkt DC erfolgen, und bei einem interruptfähigen Netzwerkteilnehmer 8' beispielhaft zu einer Unterbrechung führen. Das kann, wie oben erläutert, durch ein mechanisches Durchtrennen eines Kabels, ein Problem im Slave 3 oder Ähnlichem verursacht worden sein. Dabei kann der bereits laufende interruptfähige Netzwerkteilnehmer 8' (Slave 3) in einen Standby-Modus gehen, eine Fehlerbehebung starten oder ähnliche Vorgänge durchführen. Bei einer Unterbrechung verliert der interruptfähige Netzwerkteilnehmer 8' die Zeitsynchronisation. Dieser Ausfall 12 ist in Fig. 2 angedeutet. Der Interrupt I(8') kann nach der Unterbrechung zu einem unterschiedlichen Zeitpunkt starten, beispielsweise beim Zeitpunkt S(DC). Alternativ kann der Interrupt I(8') während der Unterbrechung weiterlaufen, wobei dieser Interrupt I(8') nicht mehr synchron mit den Interrupts I(2), I(8") der anderen Netzwerkteilnehmer 2, 8" laufen muss. Durch die Unterbrechung ist ein Zeitversatz $\Delta t$ zwischen Masterzeit $t_M$ und Slavezeit $t_S$ entstanden. Dieser Zeitversatz $\Delta t$ kann der Zeitspanne des Ausfalls 12 entsprechen. Der Zeitversatz $\Delta t$ kann aber auch eine beliebige Zeitspanne sein (je nachdem wie der Slave 3 wieder weiterarbeitet). Dieser Zeitversatz $\Delta t$ bleibt bis zum Eintreffen einer dritten Synchronisationsnachricht D3 aufrecht. Ein Zeitversatz $\Delta t$ kann einem Interruptversatz $\Delta t_C$ entsprechen, es ist aber oftmals so, dass dieser um ein Vielfaches des Interruptversatzes $\Delta t_C$ größer ist. Der Interruptversatz $\Delta t_C$ wird zum Zeitpunkt S(D3) wie zum Zeitpunkt S(D1) mit einem einzigen Zeitsprung korrigiert und der Interrupt I(8') ist damit an dieser Stelle verkürzt.

Beispielsweise hat beim Zeitpunkt S(D3) der Master 2 eine tatsächliche Zyklusdauer $t_C$ von 1000 $\mu$s des Interrupts I(2) durchlaufen, während im interruptfähigen Netzwerkteilnehmer 8' nur eine tatsächliche Zyklusdauer $t_{C,R}$ von 500 $\mu$s des Interrupts I(8') vergangen ist (obwohl dieser auch nominell 1000 $\mu$s lang ist). Bei Zeitsynchronisation mittels der dritten Synchronisationsnachricht D3 werden die fehlenden 500 $\mu$s des Interrupts I(8'), d.h. der Interruptversatz $\Delta t_C$ des interruptfähigen Netzwerkteilnehmers 8', übersprungen und resultieren in einer um den Interruptversatz $\Delta t_C$ ver- kürzten, tatsächlichen Zyklusdauer $t_C$ des Interrupts I(8').

Beispielsweise kann ein Zeitversatz $\Delta t$ 3500 $\mu$s zwischen Masterzeit $t_M$ und Slavezeit $t_S$ sein, was aber nur einem, wie oben beschriebenen, Interruptversatz $\Delta t_C$ von 500 $\mu$s entspricht. Das kann zu Problemen bei hochgenauen Arbeits- bzw. Produktionsabläufen führen, da der Timer 6 den nächsten Interrupt I(8') beispielsweise zu früh auslöst. Das Überspringen ist bei der Initialisierung im Zeitbereich t1 zwar unproblematisch, kann aber während des Betriebs zu Problemen führen, beispielsweise weil ein bestimmter Programmcode nicht vollständig ausgeführt werden kann oder Regelparameter, wie beispielsweise die Ermittlung einer Geschwindigkeit, zu definierten Zeiten falsch berechnet werden können. Es kann folglich nötig sein, einen Arbeitsablauf im Netzwerk 1 zu unterbrechen, um nach einem Verlust der Zeitsynchronisation einen korrekten Ablauf der Interrupts I(8') wiederherzustellen.

Solche Unterbrechungen können im besten Fall einen Zeitverlust in der Produktion nach sich ziehen, oder im schlimmsten Fall Schäden an Maschinen oder anderen Teilen verursachen.

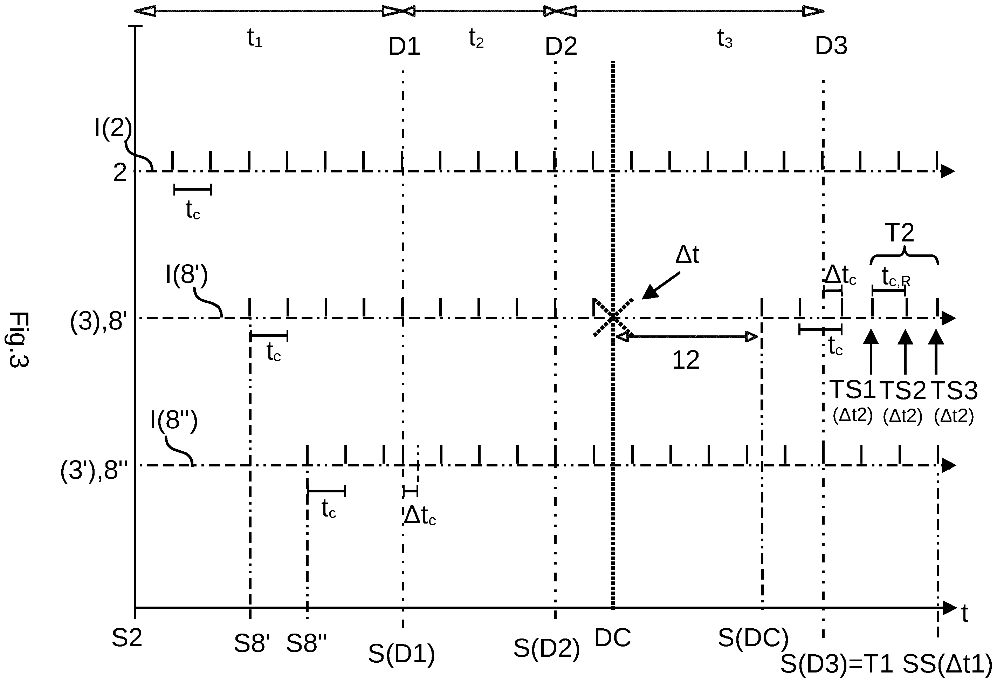

Eine erfindungsgemäße Synchronisation wird in Fig. 3 dargestellt. Der Bereich t1 und Bereich t2 entsprechen im Wesentlichen den Bereichen t1 und t2 aus Fig. 2. Diese werden daher nicht erneut beschrieben. Es kann aber auch vorgesehen sein, dass nach Starten der Interrupts I(2), I(8'), I(8") keine Zeitsprünge der Interrupts I(2), I(8'), I(8") mehr erfolgen sollen und es somit zu keiner Verkürzung der Interrupts I(2), I(8'), I(8") kommt. In einer vorteilhaften Ausführungsform kommt es daher, sobald eine Applikation gestartet ist, welche die Interrupts I(2), I(8'), I(8") verwendet, zu keinen Zeitsprüngen der Interrupts I(2), I(8'), I(8").

Im Bereich t3 von Fig. 3 kommt es zum Zeitpunkt DC zu einem Verlust der Zeitsynchronisation im interruptfähigen Netzwerkteilnehmers 8'. Der Interrupt I(8') im interruptfähigen Netzwerkteilnehmer 8' beginnt nach der Unterbrechung der Zeitsynchronisation, also nach einem Ausfall 12, wieder zu laufen bzw. kann auch während der Unterbrechung weiterlaufen, allerdings wird die Slavezeit $t_S$ beispielsweise einen gewissen Zeitraum nichtmehr korrigiert. Dann kann die Slavezeit $t_S$ langsam beginnen abzuweichen bzw. davon zu driften. Dadurch wird der Interrupt I(8') - verglichen mit den anderen Interrupts I(2), I(8") - zeitlich versetzt. Alternativ kann der interruptfähige Netzwerkteilnehmers 8' nach der Unterbrechung zum Zeitpunkt DC unabhängig von der Zeitsynchronisation wieder zu arbeiten beginnen.

Beim Zeitpunkt D3 empfängt der interruptfähige Netzwerkteilnehmer 8' (so wie der andere vorhandene Slave 3') eine dritte Synchronisationsnachricht D3 mit der Masterzeit $t_M$. Abhängig von der Unterbrechung kann jetzt die Synchronisationseinheit 5.1 im interruptfähigen Netzwerkteilnehmer 8' gegenüber dem Master 2 eine Abweichung in der Absolutzeit und in der Frequenz feststellen. Erfindungsgemäß wird ein erster Zeitanteil $\Delta t_1$ des Zeitversatzes $\Delta t$ der Slavezeit $t_S$ relativ zur Masterzeit $t_M$ in zumindest einem ersten Synchronisationsschritt T1 angeglichen, wobei der erste Zeitanteil $\Delta t_1$ einem ganzzahligen Vielfachen der Zyklusdauer $t_C$ des zumindest einen Interrupts I des interruptfähigen Netzwerkteilnehmer 8' als Slave 3 entspricht. Nach diesem ersten Synchronisationsschritt T1 ist somit der Zeitanteil $\Delta t_1$ angepasst, der einem ganzzahligen Vielfachem der Zyklusdauer $t_C$ entspricht, wobei eine noch nicht angeglichene Restdauer überbleiben kann. Somit hat der erste Synchronisationsschritt T1 wie auch in Fig. 3 gezeigt, keine Auswirkungen auf den Interrupt I(8') im interruptfähigen Netzwerkteilnehmer 8', d.h. die Interrupts I(8') sind nach wie vor asynchron, bleiben allerdings annähernd äquidistant am interruptfähigen Netzwerkteilnehmer 8'. Der erste Synchronisationsschritt T1 kann wie in Fig. 3 gezeigt in einem einzigen Schritt erfolgen, es ist aber auch möglich, dass mehrere erste Synchronisationsschritte T1 verwendet werden.

Beispielsweise kann eine Zyklusdauer $t_C$, wie im obigen Beispiel in Fig. 3, 1000 $\mu$s und der Zeitversatz $\Delta t$ der Slavezeit $t_S$ von der Masterzeit $t_M$ 100.300 $\mu$s betragen. Bei S(D3) in Fig. 3 werden die ganzzahligen Vielfachen der Zyklusdauer $t_C$ des Interrupts I, nämlich 100.000 $\mu$s - also 100 mal 1000 $\mu$S - sofort korrigiert. Die Slavezeit $t_S$ wird um diesen Wert systemintern an die Masterzeit $t_M$ angepasst. Dieses ganzzahlige Vielfache der Zyklusdauer $t_C$ wird in gegenständlicher Erfindung auch als "grober Offset" bezeichnet. Mit folgender Formel kann in einem ersten Schritt die Restdauer, der sogenannte "Restoffset" berechnet werden. Das Zeichen % beschreibt in der unteren Formel einen Modulo Operator, also eine Restwertbestimmung. Der Restoffset ist dabei eine Rechenhilfe und wird, wie unten näher beschrieben wird, bei einer Mehrzahl an Interrupts I im interruptfähigen Netzwerkteilnehmer 8', 8" als Slave 3 verwendet, um den korrekten groben Offset zu bestimmen.

Zur Berechnung des groben Offsets und des Restoffsets wird der Zeitversatz $\Delta t$ zum Master 2 und die Zyklusdauer $t_C$ des Interrupts I verwendet, welche beide bekannt sind:

$$Restoffset = (\Delta t + \frac{t_C}{2})\% t_C - \frac{t_C}{2}$$

und

$$grober\ Offset = \Delta t - Restoffset$$

Im obigen Beispiel ist der ermittelte Zeitversatz $\Delta t$ 100.300 $\mu$s, also die Differenz zwischen der Slavezeit $t_S$ und der Masterzeit $t_M$ zum Zeitpunkt S(D3), der Restoffset 300 $\mu$s und der grobe Offset 100.000 $\mu$s. Da zu diesem Zeitpunkt S(D3) nur ganzzahlige Vielfache des zumindest einen Interrupts I in der Slavezeit $t_S$ korrigiert werden, hat dieser erste Synchronisationsschritt T1 keine Auswirkungen auf die tatsächliche Zyklusdauer $t_{C,R}$ des Interrupts I(8'). Es erfolgt damit keine Unterbrechung der begonnenen Zyklusdauer $t_C$. Damit wird erreicht, dass in einem ersten Synchronisationsschritt T1 ein Abgleich der Slavezeit $t_S$ erfolgt, wobei ein verbleibender zweiter Zeitanteil $\Delta t_2$ des Zeitversatzes $\Delta t$ nach dem ersten Synchronisationsschritt T1 kleiner als die Zyklusdauer $t_C$ des Interrupts I(8') ist. Folglich entspricht der zweite Zeitanteil $\Delta t_2$ des Zeitversatz $\Delta t$ nach dem ersten Synchronisationsschritt T1 dem Interruptversatz $\Delta t_C$, welcher einem nichtganzzahligen Vielfachen aus dem Bereich ]-1,0[ und ]0,1[ entspricht, gemäß:

$$\Delta t_2 = t_c * V; \quad V \in ]-1,0[ ; ]0,1[$$

Folglich wird erfindungsgemäß dieser zweite Zeitanteil $\Delta t_2$ des Zeitversatz $\Delta t$ der Slavezeit $t_S$, welcher einem nichtganzzahligen Vielfachen V aus dem Bereich ]-1,0[ und ]0,1[ der Zyklusdauer $t_C$ des zumindest einen Interrupts I entspricht, in einer Anzahl an aufeinanderfolgenden, zweiten Synchronisationsschritten T2 mittels Frequenzabgleich und/oder Zeitsprung angeglichen. Dabei weicht in jedem Synchronisationsschritt T2 der Anzahl an zweiten Synchronisationsschritten T2 eine sich einstellende, tatsächliche Zyklusdauer $t_{C,R}$ des zumindest einen Interrupts I maximal um eine vorgegebene Abweichung dt von der vorgegebenen Zyklusdauer $t_C$ ab. In einer bevorzugten Ausführungsform ist das Intervall des zweiten Zeitanteils $\Delta t_2$ des Zeitversatz $\Delta t$ der Slavezeit $t_S$ das nicht ganzzahlige Vielfache V im Bereich von ]- ½, 0[ und ]0, ½[.

Es ist aber natürlich auch jede andere mathematische Formulierung für den Fachmann denkbar, welche den Restoffset in einer Form verändert, dass dadurch das nichtganzzahlige Vielfache V aus dem Bereich ]-1,0[ und ]0,1[ der Zyklusdauer $t_C$ des zumindest einen Interrupts I verwendet wird.

Die Anzahl der zweiten Synchronisationsschritte T2 erfolgt vorzugsweise zu den Zeitpunkten der Interrupts I(8'). Es ist auch möglich, dass die zweiten Synchronisationsschritte T2 zum Zeitpunkt der Bearbeitung einer neuen Synchronisationsnachricht D neu berechnet werden und neu angewandt werden.

In diesem zweiten Synchronisationsschritt T2 wird daher der Interruptversatz $\Delta t_C$ korrigiert, sodass die vorgegebene Zyklusdauer $t_C$ eines Interrupts I nur um eine vorgegebene Abweichung dt verkürzt oder verlängert wird. So kann die vorgegebene Abweichung dt beispielsweise 10% der Zyklusdauer $t_C$ des Interrupts I betragen. Folglich kann eine tatsächliche Zyklusdauer $t_{C,R}$ eines 1000 μs langen Interrupts I im Bereich von 900 μs bis 1100 μs adaptiert werden. Die Höhe der vorgegebenen Abweichung dt kann abhängig von der Anwendung sowie der nötigen Genauigkeit sein und wird dem Slave 3 vorgegeben. Oftmals kann aber die Abweichung dt in einem bevorzugten Bereich zwischen 0,5 und 5% sein.

Durch die oben beschriebene Art der Korrektur des Interruptversatzes $\Delta t_C$ wird sichergestellt, dass eine Zyklusdauer $t_C$ des Interrupts I nicht zu stark verkürzt wird, was ansonsten zu den oben beschriebenen Problemen führen kann.

Nach Abzug des groben Offsets im zumindest einen ersten Synchronisationsschritt T1 kann die Synchronisationseinheit 5.1 im Slave 3 einen Frequenzabgleich und/oder einen Zeitsprung durchführen. In Fig. 3 sind die zweiten Synchronisationsschritte T2 dargestellt, an denen exemplarisch drei Zeitsprünge TS1, TS2, TS3 durchgeführt werden. Während dieser drei zweiten Synchronisationsschritte TS1, TS2, TS3 weicht die tatsächliche Zyklusdauer $t_{C,R}$ von der vorgegebenen Zyklusdauer $t_C$ des Interrupts I(8') um die vorgegebene Abweichung dt ab und wird beispielsweise verkürzt. Damit erhalten diese drei Interrupts I(8') eine tatsächliche Zyklusdauer $t_{C,R}$ die kürzer als die vorgegebene Zyklusdauer $t_C$ ist. Die Zeitsprünge bzw. Frequenzabgleiche werden von der Synchronisationseinheit 5.1, beispielsweise einem in der Synchronisationseinheit 5.1 vorhandenen Clock-Servo 9, unter Einhaltung der vorgegebenen Abweichung dt durchgeführt.

Fig. 4 zeigt eine beispielhafte Ausführung eines interruptfähigen Netzwerkteilnehmers 8' als Slave 3 mit einer Synchronisationseinheit 5.1 und mit Uhr 5.2 (andere Einheiten des Slaves 3 sind aus Gründern der Einfachheit nicht dargestellt). Ein Zeitsynchronisationsstack 10, beispielsweise ein Programmcode, berechnet den Zeitversatz $\Delta t$ zum Master 2 über die Synchronisationsnachricht D bzw. der darin enthaltenen Masterzeit $t_M$. Der Clock-Servo 9 benutzt den Zeitversatz $\Delta t$ um die erfindungsgemäße Zeitsynchronisation durchzuführen und der Uhr 5.2 weiterzugeben. Die jeweils aktuelle Zeit der Uhr 5.2 wird dann einem Timer 6 vorgegeben.

Der zweite Synchronisationsschritt T2 kann in einem höheren Intervall erfolgen, als Synchronisationsnachrichten D beim Slave 3 eintreffen. In einer üblichen Implementierung kann der zweite Synchronisationsschritt T2 kontinuierlich erfolgen, bis die Slavezeit $t_S$ der Masterzeit $t_M$ entspricht. Es ist möglich - abhängig vom Zeitversatz $\Delta t$ nach dem zumindest einen ersten Synchronisationsschritt T1, dass ein zweiter Synchronisationsschritt T2 mit einem einzigen Schritt, beispielsweise durch Frequenzkorrektur, oder mit einer Anzahl an Schritten TS1, TS2, TS3, z.B. mit Sprüngen wie in Fig. 3, durchgeführt wird. Bei Frequenzkorrektur kann eine minimale Verkürzung oder Verlängerung der Basiszeiteinheiten erfolgen. Die Basiseinheit kann als ein Tick in einem Zählregister verstanden werden, wobei bei der Verlängerung oder Verkürzung jener Wert verändert wird, der bei jedem Tick zum Zählregister hinzugefügt wird. Beispielsweise zählt in einer typischen Implementierung jeder Tick (Schwingung des Quarzes) 8 ns (Nanosekunden) eines Zählregisters hoch. Ändert man diesen Basiswert von 8 ns auf, beispielsweise 8,001 ns oder 7,999 ns, so ergibt sich eine Verkürzung (weil minimal schneller gezählt wird) bzw. eine Verlängerung (weil langsamer gezählt wird) der Zeit. Der Synchronisationsschritt T2 kann damit z.B. auch als Phase verstanden werden, wobei in der Phase der restliche Offset, kontinuierlich oder in kleinen Sprüngen, abgebaut wird.

Beispielsweise können Synchronisationsnachrichten D alle 125 Millisekunden (ms), also 8-mal die Sekunde, vom Master 2 über das Netzwerk 1 gesendet werden. Eine Synchronisationseinheit 5.1 kann üblicherweise genau im Abstand der Synchronisationsnachrichten D arbeiten.

Es ist aber auch möglich, dass die Synchronisationseinheit 5.1 die Zeitsynchronisation in einer viel höheren Frequenz, beispielsweise alle 10 ms durchführt, und so die erfindungsgemäße Zeitsynchronisation zwischen zwei aufeinanderfolgenden Synchronisationsnachrichten D durchführt. Die Zeitbasis der Synchronisationsnachrichten D und die Zeitbasis der Zeitsynchronisation der Synchronisationseinheit 5.1, welche die erfindungsgemäße Synchronisationsschritte T1, T2 durchführt, können daher unterschiedlich sein. Ebenso kann die Zeitbasis der Interrupts I und des zweiten Synchronisationsschrittes T2 unterschiedlich sein.

In Fig. 3 synchronisiert die Synchronisationseinheit 5.1 beispielhafterweise so, dass der Interrupt I(8') in drei Schritten TS1, TS2, TS3 an die übrigen Interrupts I(2), I(8") angeglichen wird, was über die Verkürzung oder Verlängerung der Basiszeiteinheiten erfolgt. Danach laufen alle Interrupts I(2), I(8'), I(8") zum Zeitpunkt SS mit der vorgegebenen Zyklusdauer $t_C$ weiter. Eine neuerliche Synchronisationsnachricht D ist in diesem Fall noch nicht eingetroffen.

Die zweiten Zeitsynchronisationsschritte T2 werden, nicht notwendigerweise zum Zeitpunkt der Interrupts I ausgelöst, wie oben erwähnt und in Fig. 3 gezeigt. Es ist möglich, eine höhere Anzahl an Zeitsprüngen vorzusehen oder auch einen Frequenzabgleich durchzuführen. Erfindungsgemäß muss der zweite Synchronisationsschritt T2 so ausgestaltet sein, dass während der Synchronisation die tatsächliche Zyklusdauer $t_{C,R}$ von der Zyklusdauer $t_C$ nur um die vorgegebene Abweichung dt abweicht.

Zur Veranschaulichung ist in der folgenden Tabelle ein exemplarischer Verlauf von Synchronisationsnachrichten D und die Zeitversätze $\Delta t$ der Slavezeit ts gegeben. Die Synchronisationsnachrichten D im folgenden Beispiel werden der Einfachheit halber fortlaufend mit D0 bis D2 bezeichnet. Erst beim Erhalt der Synchronisationsnachricht D wird in diesem Beispiel der verbleibende Offset neu berechnet, die Frequenz angeglichen und somit die Abstände zwischen den Interrupts I neu festgelegt. Das geschieht so lange, bis die Zeit am Slave 3 jener des Masters 2 gleicht.

Vor der Synchronisationsnachricht D0 verliert der Slave 3 die Synchronisation zum Master 2, beispielsweise aus oben beschriebenen Gründen. Zu D0 hat der Slave 3 einen Zeitversatz $\Delta t$ in Höhe von 100.300 $\mu s$. Die Synchronisationseinheit 5.1 berechnet den Zeitversatz $\Delta t$ und führt zuerst den zumindest ersten erfindungsgemäßen Synchronisationsschritt T1 aus. Wie erwähnt muss der zumindest erste Synchronisationsschritt T1 nicht zwingend in einem einzigen Schritt erfolgen, sondern kann auch in mehreren Schritten erfolgen. Bei D0 wurde der erste Synchronisationsschritt T1 durchgeführt und der Zeitversatz $\Delta t$ beträgt danach nur mehr 300 $\mu s$, was nach dem Zeitpunkt der Synchronisationsnachricht D0 dem zweiten Anteil $\Delta t2$ des Zeitversatzes $\Delta t$ entspricht. Das könnte aber auch in zwei ersten Synchronisationsschritten T1 erfolgen, wobei beispielsweise bei der Synchronisationsnachricht D0 nur 50.000 $\mu s$ korrigiert werden, und bei der weiteren Synchronisationsnachricht D1 die zweiten 50.000 $\mu s$ (hier nicht gezeigt). Zwischen den Synchronisationsnachrichten D0 und D1 führt die Synchronisationseinheit 5.1 mehrere zweite SynchronisationsschritteT2 beispielsweise als Frequenzabgleich durch, wobei bei jedem zweiten Synchronisationsschritt T2 die maximale Abweichung dt beispielhaft ausgenutzt wird. Vor der Synchronisationsnachricht D1 ist die bei der Synchronisationsnachricht D0 identifizierte Zeitabweichung abgeglichen.

Abweichungen können zu verschiedensten Zeitpunkten durch Frequenzänderungen und Änderungen in der Absolutzeit auftreten und führen dazu, dass die Uhren 5.2 im Master 2 und im Slave 3 auseinanderlaufen. Folglich kann trotz zwischenzeitlicher Synchronisation bei neuer Synchronisationsnachricht D1 ein neuerlicher Zeitversatz $\Delta t$ festgestellt werden. Dieser ist in der Tabelle bei der Synchronisationsnachricht D1 beispielhaft mit 1450 $\mu s$ gegeben.

Jetzt läuft die erfindungsgemäße Synchronisation wie bei der Synchronisationsnachricht D0 ab, mit einem ersten Synchronisationsschritt T1 und mehreren zweiten Synchronisationsschritten T2. Solange der Zeitversatz $\Delta t$ kein ganzzahliges Vielfaches der Zyklusdauer tc des zumindest einen Interrupts I ist, wird ausschließlich der zweite Synchronisationsschritt T2 durchgeführt. Das passiert nach der Synchronisationsnachricht D2 mit einer Anzahl an zweiten Synchronisationsschritten T2,n.

| Zeit | Synchronisation | $t_C$ [$\mu s$] | Zeitversatz $\Delta t$ [$\mu s$] | Grober Offset [$\mu s$] |
|---|---|---|---|---|
| D0 | | 1000 | 100300 | 100000 |
| | T1 | | 300 | 0 |
| | T2 | | 200 | 0 |
| | T2 | | 100 | 0 |
| | | | 0 | 0 |
| D1 | | | 1450 | 1000 |
| | T1 | | 450 | 0 |
| | T2 | | 350 | 0 |
| | T2 | | 250 | 0 |
| | T2 | | 150 | 0 |
| D2 | | | 475 | 0 |
| | T2,n | | | |

In einer vorteilhaften Ausführungsform wird in der Zeitsynchronisation die Zyklusdauer $t_C$ nicht nur eines einzigen Interrupts I in einem interruptfähigen Netzwerkteilnehmer 8' beachtet, sondern auch eine Mehrzahl n an Zyklusdauern an Interrupts I. Beispielsweise kann ein Timer 6 einen ersten Interrupt I1 mit einer ersten Zyklusdauer $t_{C,1}$ und einen zweiten Interrupt I2 mit einer zweiten Zyklusdauer $t_{C,2}$ im interruptfähigen Netzwerkteilnehmer 8' erzeugen. Ebenso können dafür auch mehrere Timer 6 vorgesehen sein. Für die erfindungsgemäße Zeitsynchronisation wird das kleinste gemeinsame Vielfache kgV der vorhandenen Zyklusdauern $t_{C,1}$, ..., $t_{C,n}$ benutzt, um einen groben Offset zu berechnen, welcher im ersten Synchronisationsschritt T1 synchronisiert wird. Der zweite Synchronisationsschritt T2 wird vorzugsweise auf Basis der vorgegebenen kleinsten Abweichung dt1 der kürzesten bzw. der mit den strengsten Anforderungen behafteten Interruptdauer $t_{C,1}$, ..., $t_{C,n}$ durchgeführt. Die Berechnungen des groben Offsets und des Restoffsets können nun folgendermaßen erfolgen:

$$\text{Restoffset} = (\Delta t + \frac{kgV(t_{C,1};\ldots,t_{C,n})}{2})\% kgV(t_{C,1};\ldots,t_{C,n}) - \frac{kgV(t_{C,1};\ldots,t_{C,n})}{2}$$

und

$$\text{grober Offset} = \Delta t - \text{Restoffset}$$

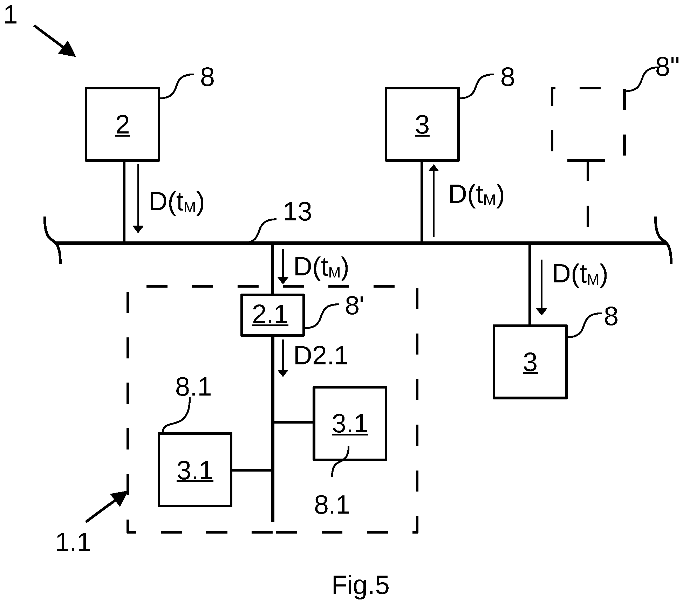

Als Beispiel können ein Interrupt I1 mit einer ersten Zyklusdauer $t_{C,1}$ von 200 µs und ein zweiter Interrupt I2 mit einer zweiten Zyklusdauer $t_{C,2}$ von 300 µs im interruptfähigen Netzwerkteilnehmer 8' erzeugt werden. Das kleinste gemeinsame Vielfache der Zyklusdauern $t_{C,1}$ und $t_{C,2}$ der Interrupts I1 und I2 entspricht dann 600 µs. Der grobe Offset wird daher vom kleinsten gemeinsamen Vielfachen berechnet und kann nur ein ganzzahliges Vielfaches der 600 µs sein, welches dann im ersten Synchronisationsschritt T1 verwendet werden kann. Somit wird sichergestellt, dass es zu keinen Unterbrechungen eines Interrupts I um einen Interruptversatz $\Delta t_c$ - auch bei einer Mehrzahl an Interrupts I1, I2 - kommt.
Es ist auch denkbar, dass zwei oder auch mehrere Netzwerke, welche einen Master und zumindest einen Slave aufweisen, miteinander verbunden sind. Jedes Netzwerk kann dabei autonom laufen und für sich eine Zeitsynchronisation wie oben beschrieben ausführen. Es kann aber auch Anwendungen oder Situationen geben, in denen ein Netzwerk zeitlich auf ein anderes Netzwerk synchronisiert werden muss. Das kann beispielsweise notwendig sein, wenn eine Anlage mit mehreren miteinander verbundenen Netzwerken hochfährt. Dabei können die Netzwerke unabhängig voneinander starten und zuerst jedes Netzwerk intern eine beschriebene Zeitsynchronisation durchführen. Danach kann sich ein Netzwerk mit einem anderen Netzwerk synchronisieren. Es ist auch denkbar, dass ein Netzwerk zu einem anderen Netzwerk hinzugeschaltet wird. Das kann beispielsweise passieren, wenn in einer Anlage mit einem Netzwerk eine Komponente (wie z.B. eine Maschine) hinzugefügt wird. Auch in solchen Situationen kann die oben beschriebene Zeitsynchronisation genutzt werden.
Hierbei wird davon ausgegangen, dass ein Netzwerk 1, wie beschrieben einen ersten Master 2 und zumindest einen Slave 3 (interruptfähiger Netzwerkteilnehmer 8, 8', 8") aufweist, wie in Fig. 5 gezeigt wird. Ein weiteres Netzwerk 1.1 weist ebenso einen weiteren Master 2.1 und zumindest einen Slave 3.1 auf. Innerhalb jedes Netzwerkes 1, 1.1 erfolgt - wie oben beschrieben - die Zeitsynchronisation mittels Synchronisationsnachrichten D, D2.1 vom jeweiligen Master 2, 2.1 in das jeweilige Netzwerk 1, 1.1. Um die Netzwerke 1, 1.1 zeitlich zu synchronisieren, agiert der weitere Master 2.1 des weiteren Netzwerkes 1.1 als Slave des Netzwerkes 1. Der weitere Master 2.1 ist hierfür mit dem Netzwerk 1 verbunden, wie in Fig. 5 dargestellt. Damit wird der als Slave des Netzwerkes 1 agierende weitere Master 2.1 über Synchronisationsnachrichten D vom Master 2 des Netzwerkes 1, wie oben beschrieben, zeitlich synchronisiert. Damit kann der weiteren Master 2.1 nun die Slaves 3.1 im eigenen, weiteren Netzwerk 1.1 mittels Synchronisationsnachricht D2.1, wie oben beschrieben, zeitlich synchronisieren.
Zu diesem Zweck ist es vorteilhaft, wenn eine Netzwerkhierarchie festgelegt ist, welche vorgibt, welches Netzwerk 1, 1.1 für die Zeitsynchronisation als weiteres bzw. untergeordnetes Netzwerk 1.1 arbeitet, das sich auf das (übergeordnete) Netzwerk 1 aufsynchronisiert.
Beim Angleichen der Uhr im weiteren Master 2.1 muss dieser allerdings alle relevanten Zykluszeiten der Interrupts I der Slaves 3.1 (und seiner eigenen Interrupts) berücksichtigen und beispielsweise nach der oben beschriebenen Formel für eine Mehrzahl von Interrupts I verwenden, um erfindungsgemäße Zeitsynchronisation zu ermöglichen.

**Patentansprüche**

**1.** Verfahren zur Zeitsynchronisation von zumindest einem Master (2) und zumindest einem Slave (3) in einem Netzwerk (1),

wobei der zumindest eine Master (2) eine Masterzeit ($t_M$) vorgibt und zumindest eine Synchronisationsnachricht (D) mit der Masterzeit ($t_M$) über das Netzwerk (1) an den zumindest einen Slave (3) sendet,
wobei der zumindest eine Slave (3), auf welchem eine Slavezeit ($t_S$) läuft, die Synchronisationsnachricht (D) verwendet, um die Slavezeit ($t_S$) an die Masterzeit ($t_m$) mittels Synchronisation anzugleichen,
wobei der zumindest eine Slave (3) ein interruptfähiger Netzwerkteilnehmer (8', 8") des Netzwerks (1) ist und einen Timer (6) verwendet, welcher auf die Slavezeit ($t_S$) zugreift, um zumindest einen in vorgegebenen Zyklusdauern ($t_C$) wiederholenden Interrupt (I) zu erzeugen,
wobei bei Eintreffen einer Synchronisationsnachricht (D) ein Zeitversatz ($\Delta t$) zwischen Masterzeit ($t_M$) und Slavezeit ($t_S$) ermittelt wird,

**dadurch gekennzeichnet, dass** ein erster Zeitanteil ($\Delta t_1$) des ermittelten Zeitversatzes ($\Delta t$) der Slavezeit ($t_S$) relativ zur Masterzeit ($t_M$) in zumindest einem ersten Synchronisationsschritt (T1) mittels Zeitsprung angeglichen wird, wobei der erste Zeitanteil ($\Delta t_1$) einem ganzzahligen Vielfachen der Zyklusdauer ($t_C$) des zumindest einen Interrupts (I) entspricht,

**und dass** ein zweiter Zeitanteil ($\Delta t_2$) des ermittelten Zeitversatzes ($\Delta t$) der Slavezeit ($t_s$) in einer Anzahl an aufeinanderfolgenden zweiten Synchronisationsschritten (T2) mittels Frequenzabgleich und/oder Zeitsprung angeglichen wird, wobei der zweite Zeitanteil ($\Delta t_2$) einem nichtganzzahligem Vielfachen aus dem Bereich ]-1,0 [ und ]0,1[ der Zyklusdauer ($t_C$) des zumindest einen Interrupts (I) entspricht und wobei in jedem der Anzahl an zweiten Synchronisationsschritten (T2) eine sich einstellende tatsächliche Zyklusdauer ($t_{C,R}$) des zumindest einen Interrupts (I) maximal um eine vorgegebene Abweichung (dt) von der vorgegebenen Zyklusdauer ($t_C$) abweicht.

2. Verfahren nach Anspruch 1, **dadurch gekennzeichnet, dass** bei einer Mehrzahl n an Interrupts (I) im interruptfähigen Netzwerkteilnehmer (8') das kleinste gemeinsame Vielfache (kgV) der Zykluszeiten ($t_{C,1}, ..., t_{C,n}$) der Mehrzahl an Interrupts (I) für den zumindest einen ersten Synchronisationsschritt (T1) herangezogen wird.

3. Verfahren nach Anspruch 2, **dadurch gekennzeichnet, dass** ein ganzzahliges Vielfaches des kleinsten gemeinsamen Vielfachen (kgV) der Zykluszeiten ($t_{C,1}, ..., t_{C,n}$) der Mehrzahl an Interrupts (I) für den zumindest einen ersten Synchronisationsschritt (T1) herangezogen wird.

4. Verfahren nach den Ansprüchen 2 oder 3, **dadurch gekennzeichnet, dass** bei einer Mehrzahl n an Interrupts (I) die Anzahl an zweiten Synchronisationsschritten T2 auf Basis der vorgegebenen kleinsten Abweichung (dt1) der Interruptdauer ($t_{C,1}, ... t_{C,n}$) durchgeführt wird.

5. Verfahren nach einem der Ansprüche 1 bis 4, **dadurch gekennzeichnet, dass** als interruptfähiger Netzwerkteilnehmer (8', 8") ein weiteres, dem Netzwerk (1) hierarchisch untergeordnetes Netzwerk (1.1) mit einem weiteren Master (2.1) verwendet wird.

6. Netzwerk bestehend aus einer Mehrzahl an Netzwerkteilnehmern (8, 8', 8"), wobei zumindest ein Netzwerkteilnehmer (8, 8', 8") ein Master (2) und zumindest ein zweiter Netzwerkteilnehmer (8, 8', 8") ein Slave (3) bezüglich einer Zeitsynchronisation ist,

wobei der zumindest eine Netzwerkteilnehmer (8, 8', 8") als Master (2) eine Masterzeit ($t_M$) aufweist und ausgebildet ist, zumindest eine Synchronisationsnachricht (D) an den zumindest zweiten Netzwerkteilnehmer (8, 8', 8") als Slave (3), welcher eine Slavezeit ($t_S$) aufweist, zu senden, und der zumindest zweite Netzwerkteilnehmer (8, 8', 8") als Slave (3) ausgebildet ist, die Slavezeit ($t_S$) an die Masterzeit ($t_M$) mittels Synchronisation anzugleichen,

wobei zumindest ein Netzwerkteilnehmer (8, 8', 8") ein interruptfähiger Netzwerkteilnehmer (8', 8") ist und einen Timer (6) aufweist, um zumindest einen in vorgegebenen Zyklusdauern ($t_C$) wiederholenden Interrupt (I) zu erzeugen,

wobei eine Synchronisationseinheit (5.2) im interruptfähigen Netzwerkteilnehmer (8', 8") ausgebildet ist, bei Eintreffen einer Synchronisationsnachricht (D) einen Zeitversatz ($\Delta t$) zwischen Masterzeit ($t_M$) und Slavezeit ($t_S$) zu ermitteln,

**dadurch gekennzeichnet, dass** die Synchronisationseinheit (5.2) weiterhin ausgebildet ist, einen ersten Zeitanteil ($\Delta t1$) des ermittelten Zeitversatzes ($\Delta t$) der Slavezeit ($t_S$) relativ zur Masterzeit ($t_M$) in zumindest einem ersten Synchronisationsschritt (T1) mittels Zeitsprung anzugleichen, wobei der erste Zeitanteil ($\Delta t1$) einem ganzzahligen Vielfachen der Zyklusdauer ($t_C$) des zumindest einen Interrupts (I) entspricht;

**und dass** die Synchronisationseinheit (5.2) einen zweiten Zeitanteil ($\Delta t_2$) der Slavezeit ($t_s$) des ermittelten Zeitversatzes ($\Delta t$) in einer Anzahl an aufeinanderfolgenden zweiten Synchronisationsschritten (T2) mittels Frequenzabgleich und/oder Zeitsprung anzugleichen, wobei der zweiten Zeitanteil ($\Delta t_2$) einem nichtganzzahligem Vielfachen aus dem Bereich ]-1,0[ und ]0,1[ der Zyklusdauer ($t_C$) des zumindest einen Interrupts (I) entspricht und wobei in jedem der Anzahl an zweiten Synchronisationsschritten (T2) eine sich einstellende tatsächliche Zyklusdauer ($t_{C,R}$) des zumindest einen Interrupts (I) maximal um eine vorgegebene Abweichung (dt) von der vorgegebenen Zyklusdauer ($t_C$) abweicht.

7. Netzwerk nach Anspruch 6, **dadurch gekennzeichnet, dass** die Synchronisationseinheit (5.2) ausgebildet ist, bei einer Mehrzahl n an Interrupts (I) im interruptfähigen Netzwerkteilnehmer (8') das kleinste gemeinsame Vielfache (kgV) der Zykluszeiten ($t_{C,1}$, ..., $t_{C,n}$) der Mehrzahl an Interrupts (I) für den zumindest einen ersten Synchronisationsschritt (T1) heranzuziehen.

8. Netzwerk nach Anspruch 7, **dadurch gekennzeichnet, dass** die Synchronisationseinheit (5.2) ausgebildet ist auch ein ganzzahliges Vielfaches des kleinsten gemeinsame Vielfachen (kgV) der Zykluszeiten ($t_{C,1}$, ..., $t_{C,n}$) der Mehrzahl an Interrupts (I) für den zumindest einen ersten Synchronisationsschritt (T1) heranzuziehen.

9. Netzwerk nach den Ansprüchen 7 oder 8, **dadurch gekennzeichnet, dass** die Synchronisationseinheit (5.2) ausgebildet ist bei einer Mehrzahl n an Interrupts (I) die Anzahl an zweiten Synchronisationsschritten T2 auf Basis der vorgegebenen kleinsten Abweichung (dt1) der Interruptdauer ($t_{C,1}$, ... $t_{C,n}$) durchzuführen.

10. Netzwerk nach einem der Ansprüche 6 bis 9, **dadurch gekennzeichnet, dass** der zumindest eine interruptfähige Netzwerkteilnehmer (8', 8") als weiteres, dem Netzwerk (1) hierarchisch untergeordnetes Netzwerk (1.1) mit einem weiteren Master (2.1) ausgestaltet ist.

**Claims**

1. A method for the time synchronization of at least one master (2) and at least one slave (3) in a network (1),

   wherein the at least one master (2) predefines a master time ($t_M$) and sends at least one synchronization message (D) with the master time ($t_M$) via the network (1) to the at least one slave (3),
   wherein the at least one slave (3), on which a slave time ($t_S$) is running, uses the synchronization message (D) to adjust the slave time ($t_S$) to the master time ($t_M$) using synchronization,
   wherein the at least one slave (3) is an interrupt-capable network component (8', 8") of the network (1) and uses a timer (6) which accesses the slave time ($t_S$) to generate at least one interrupt (I), which recurs at predefined cycle durations ($t_C$),
   wherein a time offset ($\Delta t$) between the master time ($t_M$) and the slave time ($t_S$) is determined upon arrival of a synchronization message (D),
   **characterized in that,** a first time fraction ($\Delta t_1$) of the determined time offset ($\Delta t$) of the slave time ($t_s$) relative to the master time ($t_M$) is adjusted in at least one first synchronization step (T1) using a time jump, the first time fraction ($\Delta t_1$) corresponding to an integer multiple of the cycle duration ($t_c$) of the at least one interrupt (I),
   **and that** a second time fraction ($\Delta t_2$) of the determined time offset ($\Delta t$) of the slave time ($t_s$) is adjusted in a number of successive second synchronization steps (T2) by frequency alignment and/or time step, wherein the second time fraction ($\Delta t_2$) corresponds to a non-integer multiple in the range ]-1.0[ and ]0.1[ of the cycle duration ($t_C$) of the at least one interrupt (I), and wherein in each of the number of second synchronization steps (T2) an actual occurring cycle duration ($t_{C,R}$) of the at least one interrupt (I) deviates from the predefined cycle duration ($t_C$) by no more than a predefined deviation (dt).

2. The method according to claim 1, **characterized in that,** in the case of a plurality n of interrupts (I) in the interrupt-capable network component (8'), the least common multiple (kgV) of the cycle times ($t_{C,2}$, ..., $t_{C,n}$) of the plurality of interrupts (I) is used for the at least one first synchronization step (T1).

3. The method according to claim 2, **characterized in that** an integer multiple of the least common multiple (kgV) of the cycle times ($t_{C,1}$, ..., $t_{C,n}$) of the plurality of interrupts (I) is used for the at least one first synchronization step (T1).

4. The method according to claims 2 or 3, **characterized in that,** in the case of a plurality n of interrupts (I), the number of second synchronization steps T2 is carried out based on the predefined smallest deviation (dt1) of the interrupt duration ($t_{C,1}$, ...$_{C,n}$).

5. The method according to any of claims 1 to 4, **characterized in that** a further network (1.1), that is hierarchically subordinate to the network (1) and that has a further master (2.1), is used as the interrupt-capable network component (8', 8").

6. A network comprising a plurality of network components (8, 8', 8"), wherein at least one network component (8, 8', 8") is a master (2) and at least one second network component (8, 8', 8") is a slave (3) with respect to a time synchronization,

wherein the at least one network component (8, 8', 8") serves as the master (2) has a master time ($t_M$) and is designed to send at least one synchronization message (D) to the at least second network component (8, 8', 8") serving as the slave (3), which has a slave time ($t_S$), and the at least second network component (8, 8', 8"), which serves as slave (3), is designed to adjust the slave time ($t_S$) to the master time ($t_M$) using synchronization,

wherein at least one network component (8, 8', 8") is an interrupt-capable network component (8', 8') and has a timer (6) to generate at least one interrupt (I), which recurs at predefined cycle durations ($t_C$),

wherein a synchronization unit (5.2) in the interrupt-capable network component (8', 8") is designed to determine a time offset ($\Delta t$) between the master time ($t_M$) and the slave time ($t_S$), when a synchronization message (D) arrives,

**characterized in that** the synchronization unit (5.2) is further designed to adjust a first time fraction ($\Delta T1$) of the determined time offset ($\Delta t$) of the slave time ($t_s$) relative to the master time ($t_M$) in at least one first synchronization step (T1) using a time jump, wherein the first time fraction ($\Delta T1$) corresponds to an integer multiple of the cycle duration ($t_c$) the at least one interrupt (I),

**and that** the synchronization unit (5.2) is designed to adjust a second time fraction ($\Delta t_2$) of the slave time ($t_s$) of the determined time offset ($\Delta t$) in a number of successive second synchronization steps (T2) using a frequency alignment and/or a time jump, wherein the second time fraction ($\Delta t_2$) corresponds to a non-integer multiple from the range ]-1.0[ and ]0.1[ of the cycle duration ($t_C$) of the at least one interrupt (I), and wherein in each of the number of second synchronization steps (T2) an actual occurring cycle duration ($t_{C,R}$) of the at least one interrupt (I) deviates from the predefined cycle duration ($t_C$) by no more than a predefined deviation (dt).

7. The network according to claim 6, **characterized in that** the synchronization unit (5.2) is designed, in the case of a plurality n of interrupts (I) in the interrupt-capable network component (8'), to use the least common multiple (kgV) of the cycle times ($t_{C,1}$, ..., $t_{C,n}$) of the plurality of interrupts (I) for the at least one first synchronization step (T1).

8. The network according to claim 7, **characterized in that** the synchronization unit (5.2) is designed to also use an integer multiple of the least common multiple (kgV) of the cycle times ($t_{C,1}$, ..., $t_{C,n}$) of the plurality of interrupts (I) for the at least one first synchronization step (T1).

9. The network according to claims 7 or 8, **characterized in that** the synchronization unit (5.2) is designed, in the case of a plurality n of interrupts (I), to carry out the number of second synchronization steps T2 based on the predefined smallest deviation (dt1) of the interrupt duration ($t_{C,1}$, ...$_{C,n}$).

10. The network according to any of claims 6 to 9, **characterized in that** the at least one interrupt-capable network component (8', 8") is configured as a further network (1.1) that is hierarchically subordinate to the network (1) and has a further master (2.1).

## Revendications

1. Procédé de synchronisation temporelle d'au moins un maître (2) et d'au moins un esclave (3) dans un réseau (1),

dans lequel ledit au moins un maître (2) spécifie un temps maître ($t_M$) et envoie au moins un message de synchronisation (D) avec le temps maître ($t_M$) par le réseau (1) audit au moins un esclave (3),

dans lequel ledit au moins un esclave (3), sur lequel s'écoule un temps esclave ($t_S$), utilise le message de synchronisation (D) pour rapprocher le temps esclave ($t_S$) du temps maître ($t_M$) au moyen d'une synchronisation,

dans lequel ledit au moins un esclave (3) est un abonné au réseau (8', 8") capable d'interruption du réseau (1) et utilise un temporisateur (6) qui accède au temps esclave ($t_S$) pour générer au moins une interruption (I) qui est répétée avec une durée de cycle ($t_C$) spécifiée, dans lequel, à l'arrivée d'un message de synchronisation (D), un décalage temporel ($\Delta t$) entre le temps maître ($t_M$) et le temps esclave ($t_S$) est déterminé,

**caractérisé en ce qu'**une première fraction de temps ($\Delta t_1$) du décalage temporel déterminé ($\Delta t$) du temps esclave ($t_S$) par rapport au temps maître ($t_M$) est adaptée au moyen d'un saut temporel dans au moins une première étape de synchronisation (T1), la première fraction de temps ($\Delta t_1$) correspondant à un multiple entier de la durée de cycle ($t_C$) de ladite au moins une interruption (I),

et **en ce qu'**une deuxième fraction de temps ($\Delta t_2$) du décalage temporel ($\Delta t$) déterminé est adaptée au temps esclave ($t_S$) dans un nombre de deuxièmes étapes de synchronisation (T2) successives au moyen d'un réglage de fréquence et/ou d'un saut temporel, la deuxième fraction de temps ($\Delta t_2$) étant un multiple non entier de la plage ]-1, 0[ et ]0, 1[ de la durée de cycle ($t_C$) de ladite au moins une interruption (I) et dans lequel, dans chacun du nombre de deuxièmes étapes de synchronisation (T2), une durée de cycle effective ($t_{C,R}$) de ladite au moins une interruption (I) qui s'établit s'écarte au maximum d'un écart spécifié (dt) de la durée de cycle spécifiée ($t_C$).

**2.** Procédé selon la revendication 1, **caractérisé en ce que**, dans le cas d'une pluralité n d'interruptions (I) dans l'abonné au réseau (8') capable d'interruption, le plus petit multiple commun (kgV) des durées de cycle ($t_{C,1}$, ..., $t_{C,n}$) de la pluralité d'interruptions (I) est utilisé pour ladite au moins une première étape de synchronisation (T1).

**3.** Procédé selon la revendication 2, **caractérisé en ce qu'**un multiple entier du plus petit multiple commun (kgV) des durées de cycle ($t_{C,1}$,..., $t_{C,n}$) de la pluralité d'interruptions (I) est utilisé pour ladite au moins une première étape de synchronisation (T1).

**4.** Procédé selon les revendications 2 ou 3, **caractérisé en ce que**, pour une pluralité n d'interruptions (I), le nombre de deuxièmes étapes de synchronisation T2 est effectué sur la base du plus petit écart spécifié (dt1) de la durée d'interruption ($t_{C,1}$, ... $t_{C,n}$).

**5.** Procédé selon l'une quelconque des revendications 1 à 4, **caractérisé en ce qu'**un autre réseau (1.1) hiérarchiquement subordonné au réseau (1) et comportant un autre maître (2.1) est utilisé en tant qu'abonné au réseau (8', 8") capable d'interruption.

**6.** Réseau constitué d'une pluralité d'abonnés au réseau (8, 8', 8"), au moins un abonné au réseau (8, 8', 8") étant un maître (2) et au moins un deuxième abonné au réseau (8, 8', 8'') étant un esclave (3) en ce qui concerne une synchronisation temporelle,

ledit au moins un abonné au réseau (8, 8', 8") en tant que maître (2) présentant un temps maître ($t_M$) et étant réalisé pour envoyer au moins un message de synchronisation (D) audit au moins un deuxième abonné au réseau (8, 8', 8") en tant qu'esclave (3), lequel présente un temps esclave ($t_S$), et ledit au moins un deuxième abonné au réseau (8, 8', 8") en tant qu'esclave (3) étant réalisé pour adapter le temps esclave ($t_S$) au temps maître ($t_M$) au moyen d'une synchronisation, au moins un abonné au réseau (8, 8', 8") étant un abonné au réseau (8', 8") capable d'interruption et présentant un temporisateur (6) pour générer au moins une interruption (I) qui est répétée avec des durées de cycle ($t_C$) spécifiées, une unité de synchronisation (5.2) dans l'abonné au réseau (8', 8'') capable d'interruption étant réalisée pour déterminer, lors de l'arrivée d'un message de synchronisation (D), un décalage temporel ($\Delta t$) entre le temps maître ($t_M$) et le temps esclave ($t_S$), **caractérisé en ce que** l'unité de synchronisation (5.2) est en outre réalisée pour adapter une première fraction de temps ($\Delta t1$) du décalage temporel déterminé ($\Delta t$) du temps esclave ($t_s$) par rapport au temps maître ($t_M$) dans au moins une première étape de synchronisation (T1) au moyen d'un saut temporel, la première fraction de temps ($\Delta t1$) correspondant à un multiple entier de la durée de cycle ($t_C$) de ladite au moins une interruption (I) ;
et **en ce que** l'unité de synchronisation (5.2) adapte une deuxième fraction de temps ($\Delta t_2$) du temps esclave ($t_S$) du décalage temporel déterminé ($\Delta t$) dans un nombre de deuxièmes étapes de synchronisation successives (T2) au moyen d'un réglage de fréquence et/ou d'un saut temporel, la deuxième fraction de temps ($\Delta t_2$) étant un multiple non entier de la plage ]-1, 0[ et ]0, 1[ de la durée de cycle ($t_C$) de ladite au moins une interruption (I) et dans lequel, dans chacun du nombre de deuxièmes étapes de synchronisation (T2), une durée de cycle effective ($t_{C,R}$) de ladite au moins une interruption (I) qui s'établit s'écarte au maximum d'un écart spécifié (dt) de la durée de cycle prédéfinie ($t_C$).

**7.** Réseau selon la revendication 6, **caractérisé en ce que** l'unité de synchronisation (5.2) est réalisée, dans le cas d'une pluralité n d'interruptions (I) dans l'abonné au réseau (8') capable d'interruption, pour utiliser le plus petit multiple commun (kgV) des durées de cycle ($t_{C,1}$, ..., $t_{C,n}$) de la pluralité d'interruptions (I) pour ladite au moins une première étape de synchronisation (T1).

**8.** Réseau selon la revendication 7, **caractérisé en ce que** l'unité de synchronisation (5.2) est réalisée pour utiliser un multiple entier du plus petit multiple commun (kgV) des durées de cycle ($t_{C,1}$,..., $t_{C,n}$) de la pluralité d'interruptions (I) pour ladite au moins une première étape de synchronisation (T1).

**9.** Réseau selon les revendications 7 ou 8, **caractérisé en ce que** l'unité de synchronisation (5.2) est réalisée, pour une pluralité n d'interruptions (I), pour effectuer le nombre de deuxièmes étapes de synchronisation T2 sur la base du plus petit écart prédéterminé (dt1) de la durée d'interruption ($t_{C,1}$, ... $t_{C,n}$).

**10.** Réseau selon l'une quelconque des revendications 6 à 9, **caractérisé en ce que** ledit au moins un abonné au réseau (8', 8") capable d'interruption est conçu comme un autre réseau (1.1) hiérarchiquement subordonné au réseau (1), avec un autre maître (2.1).

Fig.1

Fig.4

Fig.5

Fig.2

Fig.3

EP 4 311 134 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 111953469 A

**In der Beschreibung aufgeführte Nicht-Patentliteratur**

- **MARC AOUN et al.** Distributed Task Synchronization in Wireless Sensor Networks. *Wireless Sensor Networks*, 2009, vol. 5432, 150-165